# EUROPEAN PATENT SPECIFICATION

(11) **EP 1 984 178 B1**
(45) Date of publication and mention of the grant of the patent: **07.08.2019**
(21) Application number: 07797096.0
(22) Date of filing: 25.01.2007
(51) Int. Cl.: D02G 3/00

(54) **COATED ARTICLES FORMED OF MICROCAPSULES WITH REACTIVE FUNCTIONAL GROUPS**
AUS MIKROKAPSELN HERGESTELLTE BESCHICHTETE ARTIKEL MIT REAKTIVEN FUNKTIONELLEN GRUPPEN
ARTICLES MUNIS D'UN REVÊTEMENT FORMÉ DE MICROCAPSULES COMPRENANT DES GROUPES FONCTIONNELS RÉACTIFS

(30) Priority: 26.01.2006 US 342279
(43) Date of publication of application: 29.10.2008
(73) Proprietor: Outlast Technologies, LLC, Golden, CO 80403 (US)
(72) Inventor: HARTMANN, Mark, H., Superior, Colorado 80027 (US); DOLAN, Jennifer, Gail, Thornton, Colorado 80241 (US); EYAL, Aharon, Jerusalem (IL)
(74) Representative: Schmid, Wolfgang
(86) International application number: PCT/US2007/061081
(87) International publication number: WO 2007/130709

(56) References cited:
- EP-A1- 0 581 274
- WO-A1-01/06054
- WO-A1-2004/098767
- JP-A- 2003 193 371
- US-A- 5 366 801
- US-A- 5 804 297
- US-A- 5 851 338
- US-A1- 2003 068 482
- US-A1- 2004 043 212
- US-A1- 2004 258 922
- US-B2- 6 660 667
- US-B2- 6 660 667
- 'Dow Corning 8650 Polymer. Product Information' DOW CORNING, [Online] 06 May 2005, XP008131311 Retrieved from the Internet: <URL:http://www.dowcorning.com/content/publ ishedlit/26-1108A-01.pdf>
- 'Heloxy Modifier 68. Technical Data Sheet' HEXICON SPECIALY CHEMICALS, [Online] 2005, XP008172115 Retrieved from the Internet: <URL:http://www.resins.com/resins/am/pdf/SC 1517.pdf>
- 'Tolonate and Rhodocoat. Product Specifications' RHODA PPMC, [Online] June 2004, XP008185897 Retrieved from the Internet: <URL:http://www.rhodia-isocyanates.com/isoc yanates/mp_product_finder.jsp?RHODIA_SEARCH %3C%3Ezone=&RHODIA_SEARCH%3C%3Ekeyword=leat her+coating&NavFIdID=2534374302258935&FOLDE R%3C%3Efolder_id=2534374302259135&bmForm=se arch_in_results&bmFormID=1152087093095&.... .>

## Description

### FIELD OF THE INVENTION

The invention generally relates to coated articles. For example, coated articles formed of microcapsules with reactive functional groups are described.

### BACKGROUND OF THE INVENTION

Coatings including a phase change material have been applied to fabrics to provide thermal regulating properties to the fabrics themselves as well as to apparel or other products made from the fabrics. Typically, microcapsules containing a phase change material are mixed with a binder to form a blend, and this blend is subsequently cured on a fabric to form a coating covering the fabric. Unfortunately, the coating may lack sufficient durability in terms of retaining the microcapsules and, thus, may gradually lose its ability to provide thermal regulation after a few cycles of wearing and washing. Also, the coating may lead to undesirable reductions in breathability, drapability, flexibility, softness, visual appeal, and water absorbency and may have a tendency to produce skin irritations. For example, the coated fabric may have a tendency to be stiff and "boardy," and the relatively impermeable nature of the coating may significantly diminish the ability of the coated fabric to transport air or water vapor. When incorporated in an apparel, the coated fabric may lead to an inadequate level of comfort for an individual wearing the apparel.

It is against this background that a need arose to develop the coated articles described herein.

US 6 660 667 B2 relates to substrate coatings containing energy absorbing, temperature stabilizing phase change materials and methods of manufacturing same. More particularly, this invention relates to fabric coatings containing microspheres of phase change material dispersed in a polymer binder and methods of manufacturing same.

EP 0 581 274 A1 discloses an aroma-imparting method comprising the steps of cationizing a textile product with a liquid containing a nitrogenous cationic compound and subjecting the cationized textile product to a capsule-fixing treatment with a capusule-dispersion liquid wherein perfume-containing microcapsules are dispersed.

### SUMMARY OF THE INVENTION

The invention relates to a coated article comprising the features of claim 1.

At least one of the microcapsules is chemically bonded to either of, or both, the substrate and the binder.

Other aspects and embodiments of the invention are also contemplated. The foregoing summary and the following detailed description are not meant to restrict the invention to any particular embodiment but are merely meant to describe some embodiments of the invention.

### BRIEF DESCRIPTION OF THE DRAWINGS

For a better understanding of the nature and objects of some embodiments of the invention, reference should be made to the following detailed description taken in conjunction with the accompanying drawings, in which:
FIG. 1 illustrates a coated article that is implemented in accordance with an embodiment of the invention;
FIG. 2 illustrates a coated article that is implemented in accordance with another embodiment of the invention; and
FIG. 3 illustrates a coated article that is implemented in accordance with a further embodiment of the invention.

### DETAILED DESCRIPTION

### Overview

Embodiments of the invention relate to coated articles formed of microcapsules with functional groups. The microcapsules can provide thermal regulation by adjusting or controlling heat transfer across the coated articles. In particular, the microcapsules can include phase change materials, so that the microcapsules have the ability to absorb or release heat to adjust heat transfer. The functional groups of the microcapsules allow chemical bonding and, thus, enhances durability of the coated articles in terms of retaining the microcapsules. In such fashion, thermal regulating properties that are provided by the microcapsules can be substantially retained even after numerous cycles of wearing and washing. In conjunction with such prolonged thermal regulating properties, the coated articles can exhibit improved breathability, improved drapability, improved flexibility, improved softness, improved visual appearance, improved water absorbency, and reduced tendency to produce skin irritations.

Coated articles in accordance with various embodiments of the invention can be particularly useful when incorporated in products to be worn or otherwise used by an individual to provide a greater level of comfort. For example, the coated articles can be incorporated in apparel (e.g., outdoor clothing, drysuits, and protective suits) and footwear (e.g., socks, boots, and insoles). Advantageously, the coated articles can provide an improved level of comfort under different environmental conditions. The use of phase change materials allows the coated articles to provide "dynamic" or "multi-directional" thermal regulation rather than "static" or "unidirectional" thermal regulation. In particular, the use of phase change materials allows the coated articles to absorb thermal energy in warm weather and to release thermal energy in cold weather. In such fashion, the coated articles can adjust their thermal regulating properties under different environmental conditions. For example, the coated articles can provide cooling in warm weather and heating in cold weather, thus maintaining a desired level of comfort under changing weather conditions. Moreover, the coated articles can adjust their thermal regulating properties without requiring an external triggering mechanism, such as moisture or sunlight.

In conjunction with thermal regulating properties provided, coated articles in accordance with various embodiments of the invention when incorporated, for example, in apparel or footwear can provide other improvements in a level of comfort. For example, the coated articles can provide a reduction in an individual's skin moisture, such as due to perspiration. In particular, the coated articles can lower the temperature or the relative humidity of the skin, thereby providing a lower degree of skin moisture and a higher level of comfort. In addition, the coated articles can exhibit improved water absorbency so as to further reduce the degree of skin moisture. The use of specific materials and specific apparel or footwear design features can further enhance the level of comfort. For example, the coated articles can be used in conjunction with certain additives or treatments to provide further benefits in thermal regulating and moisture management properties.

In addition to apparel and footwear, coated articles in accordance with various embodiments of the invention can be incorporated in numerous other products to provide thermal regulating properties to those products. In particular, the coated articles can be incorporated in medical products (e.g., thermal blankets, therapeutic pads, incontinent pads, and hot/cold packs), containers and packagings (e.g., beverage/food containers, food warmers, seat cushions, and circuit board laminates), building materials (e.g., insulation in walls or ceilings, wallpaper, curtain linings, pipe wraps, carpets, and tiles), appliances (e.g., insulation in house appliances), and other products (e.g., automotive lining material, sleeping bags, furniture, mattresses, upholstery, and bedding).

### Definitions

The following definitions apply to some of the elements described with respect to some embodiments of the invention. These definitions may likewise be expanded upon herein.

As used herein, the singular terms "a," "an," and "the" include plural referents unless the context clearly dictates otherwise. Thus, for example, reference to a phase change material can include multiple phase change materials unless the context clearly dictates otherwise.

As used herein, the term "set" refers to a collection of one or more elements. Thus, for example, a set of microcapsules can include a single microcapsule or multiple microcapsules. Elements of a set can also be referred to as members of the set. Elements of a set can be the same or different. In some instances, elements of a set can share one or more common properties.

As used herein, the term "adjacent" refers to being near or adjoining. Objects that are adjacent can be spaced apart from one another or can be in actual or direct contact with one another. In some instances, objects that are adjacent can be coupled to one another or can be formed integrally with one another.

As used herein, the term "size" refers to a largest dimension of an object. Thus, for example, a size of a spheroid can refer to a major axis of the spheroid. As another example, a size of a sphere can refer to a diameter of the sphere.

As used herein, the term "monodisperse" refers to being substantially uniform with respect to a set of properties. Thus, for example, a set of microcapsules that are monodisperse can refer to such microcapsules that have a narrow distribution of sizes around a mode of the distribution of sizes, such as a mean of the distribution of sizes. In some instances, a set of microcapsules that are monodisperse can have sizes exhibiting a standard deviation of less than 10 percent or less than 5 percent.

As used herein, the term "latent heat" refers to an amount of heat absorbed or released by a material as it undergoes a transition between two states. Thus, for example, a latent heat can refer to an amount of heat that is absorbed or released as a material undergoes a transition between a liquid state and a crystalline solid state, a liquid state and a gaseous state, a crystalline solid state and a gaseous state, or two crystalline solid states.

As used herein, the term "transition temperature" refers to a temperature at which a material undergoes a transition between two states. Thus, for example, a transition temperature can refer to a temperature at which a material undergoes a transition between a liquid state and a crystalline solid state, a liquid state and a gaseous state, a crystalline solid state and a gaseous state, or two crystalline solid states. According to a non-limiting example, a temperature at whicha material undergoes a transition between a liquid state and an amorphous solid state can be referred to as a "glass transition temperature" of the material.

As used herein, the term "phase change material" refers to a material that has the capability of absorbing or releasing heat to adjust heat transfer at or within a temperature stabilizing range. A temperature stabilizing range can include a specific transition temperature or a range of transition temperatures. In some instances, a phase change material can be capable of inhibiting heat transfer during a period of time when the phase change material is absorbing or releasing heat, typically as the phase change material undergoes a transition between two states. This action is typically transient and will occur until a latent heat of the phase change material is absorbed or released during a heating or cooling process. Heat can be stored or removed from a phase change material, and the phase change material typically can be effectively recharged by a source of heat or cold. For certain implementations, a phase change material can be a mixture of two or more materials. By selecting two or more different materials and forming a mixture, a temperature stabilizing range can be adjusted for any desired application. The resulting mixture can exhibit two or more different transition temperatures or a single modified transition temperature when incorporated in the coated articles described herein.

Examples of phase change materials include a variety of organic and inorganic substances, such as alkanes, alkenes, alkynes, arenes, hydrated salts (e.g., calcium chloride hexahydrate, calcium bromide hexahydrate, magnesium nitrate hexahydrate, lithium nitrate trihydrate, potassium fluoride tetrahydrate, ammonium alum, magnesium chloride hexahydrate, sodium carbonate decahydrate, disodium phosphate dodecahydrate, sodium sulfate decahydrate, and sodium acetate trihydrate), waxes, oils, water, fatty acids, fatty acid esters, dibasic acids, dibasic esters, 1-halides, primary alcohols, clathrates, semi-clathrates, gas clathrates, anhydrides (e.g., stearic anhydride), ethylene carbonate, polyhydric alcohols (e.g., 2,2-dimethyl-1,3-propanediol, 2-hydroxymethyl-2-methyl-1,3-propanediol, ethylene glycol, pentaerythritol, dipentaerythritol, pentaglycerine, tetramethylol ethane, neopentyl glycol, tetramethylol propane, 2-amino-2-methyl-1,3-propanediol, monoaminopentaerythritol, diaminopentaerythritol, and tris(hydroxymethyl)acetic acid), polymers (e.g., polyethylene, polyethylene glycol, polyethylene oxide, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyesters produced by polycondensation of glycols (or their derivatives) with diacids (or their derivatives), and copolymers, such as polyacrylate or poly(meth)acrylate with alkyl hydrocarbon side chain or with polyethylene glycol side chain and copolymers including polyethylene, polyethylene glycol, polyethylene oxide, polypropylene, polypropylene glycol, or polytetramethylene glycol), metals, and mixtures thereof. Other examples of phase change materials include those described in the patent application of Magill et al., U.S. Patent Application Publication No. 2005/0208300, entitled "Multi-component Fibers Having Enhanced Reversible Thermal Properties and Methods of Manufacturing Thereof". Further examples of phase change materials include those described in Japanese Patent Application Publication No. 2004-003087, entitled "Thermal Storage Conjugated Fiber and Thermal Storage Cloth Member".

As used herein, the term "polymer" refers to a material that includes a set of macromolecules. Macromolecules included in a polymer can be the same or can differ from one another in some fashion. A macromolecule can have any of a variety of skeletal structures, and can include one or more types of monomeric units. In particular, a macromolecule can have a skeletal structure that is linear or non-linear. Examples of non-linear skeletal structures include branched skeletal structures, such those that are star branched, comb branched, or dendritic branched, and network skeletal structures. A macromolecule included in a homopolymer typically includes one type of monomeric unit, while a macromolecule included in a copolymer typically includes two or more types of monomeric units. Examples of copolymers include statistical copolymers, random copolymers, alternating copolymers, periodic copolymers, block copolymers, radial copolymers, and graft copolymers. In some instances, a reactivity and a functionality of a polymer can be altered by addition of a set of functional groups, such as acid anhydride groups, amino groups, N-substituted amino groups, amide groups, carbonyl groups, carboxy groups, cyclohexyl epoxy groups, epoxy groups, glycidyl groups, hydroxy groups, isocyanate groups, and combinations thereof. Such functional groups can be added at various places along the polymer, such as randomly or regularly dispersed along the polymer, at ends of the polymer, attached as dangling side groups of the polymer, or attached directly to a backbone of the polymer. Also, a polymer can be capable of cross-linking, entanglement, or hydrogen bonding in order to increase its mechanical strength or its resistance to degradation under ambient or processing conditions. As can be appreciated, a polymer can be provided in a variety of forms having different molecular weights, since a molecular weight of the polymer can be dependent upon processing conditions used for forming the polymer. Accordingly, a polymer can be referred to as having a specific molecular weight or a range of molecular weights. As used herein with reference to a polymer, the term "molecular weight" can refer to a number average molecular weight, a weight average molecular weight, or a melt index of the polymer.

Examples of polymers include polyhydroxyalkonates, polyamides, polyamines, polyimides, polyacrylics (e.g., polyacrylamide, polyacrylonitrile, and esters of methacrylic acid and acrylic acid), polycarbonates (e.g., polybisphenol A carbonate and polypropylene carbonate), polydienes (e.g., polybutadiene, polyisoprene, and polynorbornene), polyepoxides, polyesters (e.g., polycaprolactone, polyethylene adipate, polybutylene adipate, polypropylene succinate, polyesters based on terephthalic acid, and polyesters based on phthalic acid), polyethers (e.g., polyethylene glycol or polyethylene oxide, polybutylene glycol, polypropylene oxide, polyoxymethylene or paraformaldehyde, polytetramethylene ether or polytetrahydrofuran, and polyepichlorohydrin), polyfluorocarbons, formaldehyde polymers (e.g., urea-formaldehyde, melamine-formaldehyde, and phenol formaldehyde), natural polymers (e.g., polysaccharides, such as cellulose, chitan, chitosan, and starch; lignins; proteins; and waxes), polyolefins (e.g., polyethylene, polypropylene, polybutylene, polybutene, and polyoctene), polyphenylenes, silicon-containing polymers (e.g., polydimethyl siloxane and polycarbomethyl silane), polyurethanes, polyvinyls (e.g., polyvinyl butyral, polyvinyl alcohol, esters and ethers of polyvinyl alcohol, polyvinyl acetate, polystyrene, polymethylstyrene, polyvinyl chloride, polyvinyl pryrrolidone, polymethyl vinyl ether, polyethyl vinyl ether, and polyvinyl methyl ketone), polyacetals, polyarylates, alkyd-based polymers (e.g., polymers based on glyceride oil), copolymers (e.g., polyethylene-co-vinyl acetate and polyethylene-co-acrylic acid), and mixtures thereof.

As used herein, the term "chemical bond" and its grammatical variations refer to a coupling of two or more atoms based on an attractive interaction, such that those atoms can form a stable structure. Examples of chemical bonds include covalent bonds and ionic bonds. Other examples of chemical bonds include attractive interactions between carboxy groups and amide groups.

As used herein, the term "group" refers to a set of atoms that form a portion of a molecule. In some instances, a group can include two or more atoms that are chemically bonded to one another to form a portion of a molecule. A group can be monovalent or polyvalent (e.g., bivalent) to allow chemical bonding to a set of additional groups of a molecule. For example, a monovalent group can be envisioned as a molecule with a set of hydride groups removed to allow chemical bonding to another group of a molecule. A group can be neutral, positively charged, or negatively charged. For example, a positively charged group can be envisioned as a neutral group with one or more protons (i.e., H+) added, and a negatively charged group can be envisioned as a neutral group with one or more protons removed. A group that exhibits a characteristic reactivity or other set of properties can be referred to as a functional group. Examples of groups include an acid anhydride group, an alkenyl group, an alkyl group, an aldehyde group, an amide group, an amino group, a N-substituted amino group, an aryl group, a carbonyl group, a carboxy group, an epoxy group, an ester group, an ether group, a glycidyl group, a halo group, a hydride group, a hydroxy group, an isocyanate group, a thiol group, a disulfide group, an urea group, and an urethane group.

As used herein, the term "alkane" refers to a saturated hydrocarbon molecule. For certain implementations, an alkane can include from 1 to 100 carbon atoms. The term "lower alkane" refers to an alkane that includes from 1 to 20 carbon atoms, such as from 1 to 10 carbon atoms, while the term "upper alkane" refers to an alkane that includes more than 20 carbon atoms, such as from 21 to 100 carbon atoms. The term "non-linear alkane" refers to an alkane that includes a set of branches, while the term "linear alkane" refers to an alkane that is straight-chained. The term "cycloalkane" refers to an alkane that includes a set of ring structures. The term "heteroalkane" refers to an alkane that has a set of carbon atoms replaced by a set of heteroatoms, such as N, Si, S, O, and P. The term "substituted alkane" refers to an alkane that has a set of its hydride groups replaced by a set of other groups, while the term "unsubstituted alkane" refers to an alkane that lacks such substitution. Combinations of the above terms can be used to refer to an alkane having a combination of properties.

As used herein, the term "alkyl group" refers to a monovalent form of an alkane. For example, an alkyl group can be envisioned as an alkane with a set of hydride groups removed to allow chemical bonding to another group of a molecule. The term "lower alkyl group" refers to a monovalent form of a lower alkane, while the term "upper alkyl group" refers to a monovalent form of an upper alkane. The term "non-linear alkyl group" refers to a monovalent form of a non-linear alkane, while the term "linear alkyl group" refers to a monovalent form of a linear alkane. The term "cycloalkyl group" refers to a monovalent form of a cycloalkane, and the term "heteroalkyl group" refers to a monovalent form of a heteroalkane. The term "substituted alkyl group" refers to a monovalent form of a substituted alkane, while the term "unsubstituted alkyl group" refers to a monovalent form of an unsubstituted alkane. Combinations of the above terms can be used to refer to an alkyl group having a combination of properties.

As used herein, the term "alkene" refers to an unsaturated hydrocarbon molecule that includes a set of carbon-carbon double bonds. For certain implementations, an alkene can include from 2 to 100 carbon atoms. The term "lower alkene" refers to an alkene that includes from 2 to 20 carbon atoms, such as from 2 to 10 carbon atoms, while the term "upper alkene" refers to an alkene that includes more than 20 carbon atoms, such as from 21 to 100 carbon atoms. The term "cycloalkene" refers to an alkene that includes a set of ring structures. The term "heteroalkene" refers to an alkene that has a set of carbon atoms replaced by a set of heteroatoms, such as N, Si, S, O, and P. The term "substituted alkene" refers to an alkene that has a set of its hydride groups replaced by a set of other groups, while the term "unsubstituted alkene" refers to an alkene that lacks such substitution. Combinations of the above terms can be used to refer to an alkene having a combination of characteristics.

As used herein, the term "alkenyl group" refers to a monovalent form of an alkene. For example, an alkenyl group can be envisioned as an alkene with a set of hydride groups removed to allow chemical bonding to another group of a molecule. The term "lower alkenyl group" refers to a monovalent form of a lower alkene, while the term "upper alkenyl group" refers to a monovalent form of an upper alkene. The term "cycloalkenyl group" refers to a monovalent form of a cycloalkene, and the term "heteroalkenyl group" refers to a monovalent form of a heteroalkene. The term "substituted alkenyl group" refers to a monovalent form of a substituted alkene, while the term "unsubstituted alkenyl group" refers to a monovalent form of an unsubstituted alkene. Combinations of the above terms can be used to refer to an alkenyl group having a combination of characteristics.

As used herein, the term "alkyne" refers to an unsaturated hydrocarbon molecule that includes a set of carbon-carbon triple bonds. In some instances, an alkyne can also include a set of carbon-carbon double bonds. For certain applications, an alkyne can include from 1 to 100 carbon atoms. The term "lower alkyne" refers to an alkyne that includes from 2 to 20 carbon atoms, such as from 2 to 10 carbon atoms, while the term "upper alkyne" refers to an alkyne that includes more than 20 carbon atoms, such as from 21 to 100 carbon atoms. The term "cycloalkyne" refers to an alkyne that includes a set of ring structures. The term "heteroalkyne" refers to an alkyne that has a set of carbon atoms replaced by a set of heteroatoms, such as N, Si, S, O, and P. The term "substituted alkyne" refers to an alkyne that has a set of its hydride groups replaced by a set of other groups, while the term "unsubstituted alkyne" refers to an alkyne that lacks such substitution. Combinations of the above terms can be used to refer to an alkyne having a combination of characteristics.

As used herein, the term "alkynyl group" refers to a monovalent form of an alkyne. For example, an alkynyl group can be envisioned as an alkyne with a set of hydride groups removed to allow chemical bonding to another group of a molecule. The term "lower alkynyl group" refers to a monovalent form of a lower alkyne, while the term "upper alkynyl group" refers to a monovalent form of an upper alkyne. The term "cycloalkynyl group" refers to a monovalent form of a cycloalkyne, and the term "heteroalkynyl group" refers to a monovalent form of a heteroalkyne. The term "substituted alkynyl group" refers to a monovalent form of a substituted alkyne, while the term "unsubstituted alkynyl group" refers to a monovalent form of an unsubstituted alkyne. Combinations of the above terms can be used to refer to an alkynyl group having a combination of characteristics.

As used herein, the term "arene" refers to an aromatic hydrocarbon molecule. For certain applications, an arene can include from 5 to 100 carbon atoms. The term "lower arene" refers to an arene that includes from 5 to 20 carbon atoms, such as from 5 to 14 carbon atoms, while the term "upper arene" refers to an arene that includes more than 20 carbon atoms, such as from 21 to 100 carbon atoms. The term "monocyclic arene" refers to an arene that includes a single aromatic ring structure, while the term "polycyclic arene" refers to an arene that includes multiple aromatic ring structures, such as two or more aromatic ring structures that are bonded via a carbon-carbon bond or that are fused together. The term "heteroarene" refers to an arene that has a set of carbon atoms replaced by a set of heteroatoms, such as N, Si, S, O, and P. The term "substituted arene" refers to an arene that has a set of its hydride groups replaced by a set of other groups, while the term "unsubstituted arene" refers to an arene that lacks such substitution. Combinations of the above terms can be used to refer to an arene having a combination of characteristics.

As used herein, the term "aryl group" refers to a monovalent form of an arene. For example, an aryl group can be envisioned as an arene with a set of hydride groups removed to allow chemical bonding to another group of a molecule. The term "lower aryl group" refers to a monovalent form of a lower arene, while the term "upper aryl group" refers to a monovalent form of an upper arene. The term "monocyclic aryl group" refers to a monovalent form of a monocyclic arene, while the term "polycyclic aryl group" refers to a monovalent form of a polycyclic arene. The term "heteroaryl group" refers to a monovalent form of a heteroarene. The term "substituted aryl group" refers to a monovalent form of a substituted arene, while the term "unsubstituted arene group" refers to a monovalent form of an unsubstituted arene. Combinations of the above terms can be used to refer to an aryl group having a combination of characteristics.

As used herein, the term "acid anhydride group" refers to: -CO-O-CO-.

As used herein, the term "aldehyde group" refers to: -CHO.

As used herein, the term "amide group" refers to:

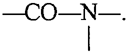

As used herein, the term "amino group" refers to: -NH₂.

As used herein, the term "N-substituted amino group" refers to an amino group that has a set of its hydride groups replaced by a set of other groups. Examples of N-substituted amino groups include: -NR⁽¹⁾R⁽²⁾, where R⁽¹⁾ and R⁽²⁾ are selected from hydride groups, alkyl groups, alkenyl groups, alkynyl groups, and aryl groups, and at least one of R⁽¹⁾ and R⁽²⁾ is not a hydride group.

As used herein, the term "carbonyl group" refers to: -CO-.

As used herein, the term "carboxy group" refers to: -COOH.

As used herein, the term "epoxy group" refers to:

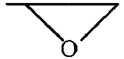

As used herein, the term "ester group" refers to: -CO-O-. Examples of ester groups include those based on an alcohol (e.g., methanol, ethanol, isopropanol, isobutanol, or butanol) as a leaving group, those based on acetic acid as a leaving group, those based on phosphoric acid, those based on sulfuric or sulfate, and those based on triflouroacetate.

As used herein, the term "ether group" refers to: -O-. Examples of ether groups include those based on an alcohol as a leaving group.

As used herein, the term "glycidyl group" refers to:

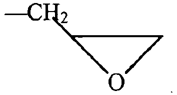

As used herein, the term "halo group" refers to: -X, where X is a halogen atom. Examples of halo groups include fluoro, chloro, bromo, and iodo.

As used herein, the term "hydride group" refers to: -H.

As used herein, the term "hydroxy group" refers to: -OH.

As used herein, the term "isocyanate group" refers to: -NCO.

As used herein, the term "thiol group" refers to: -SH.

As used herein, the term "disulfide group" refers to: -S-S-.

As used herein, the term "silyl group" refers to -SiR⁽³⁾R⁽⁴⁾R⁽⁵⁾, where R⁽³⁾, R⁽⁴⁾, and R⁽⁵⁾ are independently selected from various groups, such as hydride groups, halo groups, alkyl groups, alkenyl groups, and alkynyl groups.

As used herein, the term "urea group" refers to

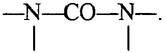

As used herein, the term "urethane group" refers to:

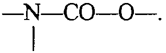

### Coated Article

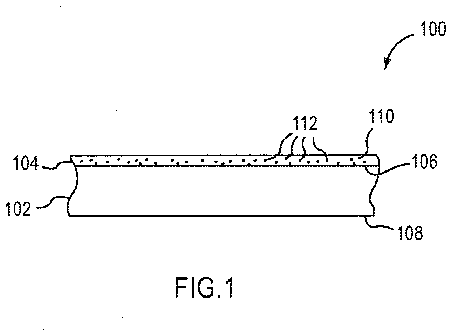

Attention first turns to FIG. 1, which illustrates a coated article 100 that is implemented in accordance with an embodiment of the invention. In particular, FIG. 1 illustrates a side, sectional view of the coated article 100, which includes a first layer 102 and a second layer 104 that is adjacent to the first layer 102.

In the illustrated embodiment, the first layer 102 is implemented as a substrate and is formed of any suitable material, such as a fibrous material or a polymer. Thus, for example, the first layer 102 can be a natural or synthetic fiber (e.g., a fiber formed of polyester, polyamide, polyacrylic, polylactic acid, polyolefin, polyurethane, natural or regenerated cellulose, silk, or wool), a natural or synthetic filament, a yarn formed of natural or synthetic fibers, a fabric formed of natural or synthetic fibers (e.g., a knitted fabric, a woven fabric, or a non-woven fabric), a film, a leather, a cardboard, a paper, or a piece of wood. While not illustrated in FIG. 1, it is contemplated that the first layer 102 can be formed so as to include two or more sub-layers, which can be formed of the same material or different materials.

The selection of a material forming the first layer 102 can be dependent upon various considerations, such as its affinity for the second layer 104, its ability to reduce or eliminate heat transfer, its breathability, its drapability, its flexibility, its softness, its water absorbency, its film-forming ability, its resistance to degradation under ambient or processing conditions, and its mechanical strength. In particular, for certain implementations, a material forming the first layer 102 can be selected so as to include a set of functional groups, such as acid anhydride groups, aldehyde groups, amino groups, N-substituted amino groups, carbonyl groups, carboxy groups, epoxy groups, ester groups, ether groups, glycidyl groups, hydroxy groups, isocyanate groups, thiol groups, disulfide groups, silyl groups, groups based on glyoxals, groups based on aziridines, groups based on active methylene compounds or other b-dicarbonyl compounds (e.g., 2,4-pentandione, malonic acid, acetylacetone, ethylacetone acetate, malonamide, acetoacetamide and its methyl analogues, ethyl acetoacetate, and isopropyl acetoacetate), or combinations thereof. At least some of these functional groups can be exposed on a top surface 106 of the first layer 102 and can allow chemical bonding to a set of complementary functional groups included in the second layer 104, thereby enhancing durability of the coated article 100 during processing or during use. Thus, for example, the first layer 102 can be formed of cellulose and can include a set of hydroxy groups, which can chemically bond to a set of carboxy groups included in the second layer 104. As another example, the first layer 102 can be formed of silk or wool and can include a set of amino groups, which can chemically bond to those carboxy groups included in the second layer 104. As can be appreciated, chemical bonding between a pair of functional groups can result in the formation of another functional group, such as an amide group, an ester group, an ether group, an urea group, or an urethane group. Thus, for example, chemical bonding between a hydroxy group and a carboxy group can result in the formation of an ester group, while chemical bonding between an amino group and a carboxy group can result in the formation of an amide group.

For certain implementations, a material forming the first layer 102 can initially lack a set of functional groups, but can be subsequently modified so as to include those functional groups. In particular, the first layer 102 can be formed by combining different materials, one of which lacks a set of functional groups, and another one of which includes those functional groups. These different materials can be uniformly mixed or can be incorporated in separate regions or separate sub-layers. For example, the first layer 102 can be formed by combining polyester fibers with a certain amount (e.g., 25 percent by weight or more) of cotton or wool fibers that include a set of functional groups. The polyester fibers can be incorporated in an outer sub-layer, while the cotton or wool fibers can be incorporated in an inner sub-layer, adjacent to which the second layer 104 can be formed. As another example, a material forming the first layer 102 can be chemically modified so as to include a set of functional groups. Chemical modification can be performed using any suitable technique, such as using oxidizers, corona treatment, or plasma treatment. Chemical modification can also be performed as described in the patent of Kanazawa, U.S. Patent 6,830,782, entitled "Hydrophilic Polymer Treatment of an Activated Polymeric Material and Use Thereof". In some instances, a material forming the first layer 102 can be treated so as to form radicals that can react with monomers including a set of functional groups. Examples of such monomers include those with anhydride groups (e.g., maleic anhydride), those with carboxy groups (e.g., acrylic acid), those with hydroxy groups (e.g., hydroxyl ethyl acrylate), and those with epoxy or glycidyl groups (e.g., glycidyl methacrylate). In other instances, a material forming the first layer 102 can be treated with a set of functional materials to add a set of functional groups as well as to provide desirable moisture management properties. These functional materials can include hydrophilic polymers, such as polyvinyl alcohol, polyglycols, polyacrylic acid, polymethacrylic acid, hydrophilic polyesters, and copolymers thereof. For example, these functional materials can be added during a fiber manufacturing process, during a fabric dyeing process, or during a fabric finishing process. Alternatively, or in conjunction, these functional materials can be incorporated into a fabric via exhaust dyeing, pad dyeing, or jet dyeing.

As illustrated in FIG. 1, the second layer 104 is implemented as a coating that is formed adjacent to the first layer 102 using any suitable coating technique. During use, the second layer 104 can be positioned so that it is adjacent to an internal compartment or an individual's skin, thus serving as an inner coating. It is also contemplated that the second layer 104 can be positioned so that it is exposed to an outside environment, thus serving as an outer coating. Referring to FIG. 1, the second layer 104 covers at least a portion of the top surface 106. Depending on characteristics of the first layer 102 or a specific coating technique that is used, the second layer 104 can penetrate below the top surface 106 and permeate at least a portion of the first layer 102. While two layers are illustrated in FIG. 1, it is contemplated that the coated article 100 can include more or less layers for other implementations. In particular, it is contemplated that a third layer (not illustrated in FIG. 1) can be included so as to cover at least a portion of a bottom surface 108 of the first layer 102. Such a third layer can be implemented in a similar fashion as the second layer 104 or can be implemented in another fashion to provide different functionality, such as water repellency or stain resistance. It is also contemplated that a material or materials forming the second layer 104 can be included within the first layer 102, so that the second layer 104 can be omitted.

In the illustrated embodiment, the second layer 104 is formed of a binder 110 and a set of microcapsules 112 that are dispersed in the binder 110. The binder 110 can be any suitable material that serves as a matrix within which the microcapsules 112 are dispersed, thus offering a degree of protection to the microcapsules 112 against ambient or processing conditions or against abrasion or wear during use. For example, the binder 110 can be a polymer or any other suitable medium used in certain coating techniques. For certain implementations, the binder 110 is desirably a polymer having a glass transition temperature ranging from about -110°C to about -40°C, such as from about -110°C to about -75°C. While a polymer that is water soluble or water dispersible can be particularly desirable, a polymer that is water insoluble or slightly water soluble can also be used as the binder 110 for certain implementations.

The selection of the binder 110 can be dependent upon various considerations, such as its affinity for the microcapsules 112 or the first layer 102, its ability to reduce or eliminate heat transfer, its breathability, its drapability, its flexibility, its softness, its water absorbency, its coating-forming ability, its resistance to degradation under ambient or processing conditions, and its mechanical strength. In particular, for certain implementations, the binder 110 can be selected so as to include a set of functional groups, such as acid anhydride groups, aldehyde groups, amino groups, N-substituted amino groups, carbonyl groups, carboxy groups, epoxy groups, ester groups, ether groups, glycidyl groups, hydroxy groups, isocyanate groups, thiol groups, disulfide groups, silyl groups, groups based on glyoxals, groups based on aziridines, groups based on active methylene compounds or other b-dicarbonyl compounds (e.g., 2,4-pentandione, malonic acid, acetylacetone, ethylacetone acetate, malonamide, acetoacetamide and its methyl analogues, ethyl acetoacetate, and isopropyl acetoacetate), or combinations thereof. These functional groups can allow chemical bonding to a complementary set of functional groups included in either of, or both, the microcapsules 112 and the first layer 102, thereby enhancing durability of the coated article 100 during processing or during use. Thus, for example, the binder 110 can be a polymer that includes a set of epoxy groups, which can chemically bond to a set of carboxy groups included in the microcapsules 112. As another example, the binder 110 can be a polymer that includes a set of isocyanate groups or a set of amino groups, which can chemically bond with those carboxy groups included in the microcapsules 112.

Examples of polymers that can be used as the binder 110 include those with epoxy groups, such as in the form of glycidyl groups, glycidyl groups chemically bonded via ether groups, cyclohexyl epoxy groups, or any other suitable epoxy-based functionality. For certain implementations, the binder 110 can be a silicon-containing polymer that includes a set of epoxy groups, such as one in which the content of the epoxy groups ranges from about 0.2 percent to about 5.0 percent by weight or from about 0.4 percent to about 2.0 percent by weight. A desirable molecular weight of a silicon-containing polymer can range from about 500 Daltons to about 50,000 Daltons. For high temperature applications where a curing temperature is greater than about 150°C, a higher molecular weight can be desirable, such as one ranging from about 20,000 Daltons to about 50,000 Daltons. Such higher molecular weight can serve to reduce volatilization of the silicon-containing polymer, thereby reducing the generation of smoke and odors. On the other hand, a lower molecular weight, such as one ranging from about 500 Daltons to about 20,000 Daltons, can be desirable for low temperature applications. Examples of suitable silicon-containing polymers include SILMER EP C50, SILMER EP J10, SILMER EP Di-50, and SILMER EP Di-100, which are supplied by Siltech Corp. Additional examples of suitable silicon-containing polymers include 8650 epoxy silicon, BY16-876, and SM8715 Ex, which are supplied by Dow Corning Inc.

Additional examples of polymers that can be used as the binder 110 include polyglycols with epoxy groups, hydrocarbon resins with epoxy groups, and any other polymers with epoxy groups. For example, the binder 110 can be a polyglycol, such as a diglycidyl ether of polyethylene glycol, a diglycidyl ether of polypropylene glycol, or a copolymer thereof. Other examples of suitable polymers include HELOXY Modifier 48 (based on trimethyol propane triglycidyl ether), HELOXY 68 (based on diglycidyl ether of neopentyl glycol), HELOXY 71 (based on dimer acid diglycidyl ether), HELOXY 84 (polyglycidyl ether of aliphatic polyol), and HELOXY 505 (polyglycidyl ether of castor oil), which are supplied by Resolution Performance Products, Inc. Further suitable polymers include those based on tetraglycidyl meta-xylenediamine, which are supplied by CVC Speciality Chemicals Inc, and copolymers of long chain acrylates and glycidyl methacrylates.

Other examples of polymers that can be used as the binder 110 include polyols with isocyanate groups, such as those in which the content of the isocyanate groups ranges from about 5 percent to about 30 percent by weight or from about 10 percent to about 25 percent by weight. Examples of such polyols include TOLONATE HDB-LV, TOLONATE HDT-LV2, RHODOCOAT WT 2102, and RHODOCOAT WAT 1, which are supplied by Rhodia Corp. Other examples of such polyols include BAYHYDUR VPLS 2336, BAYHYDUR VPLS 2319, BAYHYDUR XP7165, BAYHYDUR VPLS 2306, BAYHYDUR XP2547, and BAYHYDUR 303, which are supplied by Bayer Chemicals Inc. Water dispersible polymers with blocked isocyanate groups are also suitable, particularly for high temperature applications. Examples of such polymers include ECCO X-link AP-900, which is supplied by Eastern Chemicals, REPEARL MF, which is supplied by Mitsubishi Chemicals Corp., BAYHYDUR VPLS 2240, which is supplied by Bayer Chemicals Inc., and RHODOCOAT WT 1000, which is supplied by Rhodia Corp.

Further examples of polymers that can be used as the binder 110 include those with amino groups. A polymer with a set of amino groups can also be used as a modifier, such as for cross-linking with a set of epoxy groups or a set of isocyanate groups of another polymer. For certain implementations, the binder 110 can be a silicon-containing polymer that includes a set of amino groups, such as one in which the content of the amino groups ranges from about 0.1 percent to about 20 percent by weight or from about 0.5 percent to about 5 percent by weight. Examples of suitable silicon-containing polymers include those supplied by Ciba Specialty Chemicals, Siltech Corp., Wacker Silicones Corp., Dow Corning Company, Goldschmidt Chemical Corp., and General Electric Company.

Referring to FIG. 1, the microcapsules 112 can have the same shape or different shapes, and can have the same size or different sizes. In some instances, the microcapsules 112 can be substantially spheroidal or spherical, and can have sizes ranging from about 0.1 to about 1,000 microns, such as from about 0.1 to about 500 microns, from about 0.1 to about 100 microns, from about 1 to about 15 microns, from about 1 to about 10 microns, from about 1 to about 5 microns, or from about 2 to about 3 microns. For certain implementations, it can be desirable that a substantial fraction, such as at least 50 percent, at least 60 percent, at least 70 percent, or at least 80 percent, of the microcapsules 112 have sizes within a specified range, such as from about 1 to about 15 microns or from about 1 to about 5 microns. It can also be desirable that the microcapsules 112 are monodisperse with respect to either of, both, their shapes and sizes.

In the illustrated embodiment, the microcapsules 112 are implemented to contain a phase change material, which serves to absorb or release heat to reduce or eliminate heat transfer across the coated article 100. In particular, the microcapsules 112 are formed as shells that define internal compartments within which the phase change material is positioned. The shells can be formed of any suitable material that serves to contain the phase change material, thus offering a degree of protection to the phase change material against ambient or processing conditions or against loss or leakage during use. For example, the shells can be formed of a polymer or any other suitable encapsulation material.

The selection of a material forming the shells can be dependent upon various considerations, such as its affinity for the binder 110 or the first layer 102, its reactivity or lack of reactivity with the phase change material, its resistance to degradation under ambient or processing conditions, and its mechanical strength. In particular, for certain implementations, a material forming the shells can be selected so as to include a set of functional groups, such as acid anhydride groups, aldehyde groups, amino groups, N-substituted amino groups, carbonyl groups, carboxy groups, epoxy groups, ester groups, ether groups, glycidyl groups, hydroxy groups, isocyanate groups, thiol groups, disulfide groups, silyl groups, groups based on glyoxals, groups based on aziridines, groups based on active methylene compounds or other b-dicarbonyl compounds (e.g., 2,4-pentandione, malonic acid, acetylacetone, ethylacetone acetate, malonamide, acetoacetamide and its methyl analogues, ethyl acetoacetate, and isopropyl acetoacetate), or combinations thereof. At least some of these functional groups can be exposed on outer surfaces of the shells and can allow chemical bonding to a complementary set of functional groups included in either of, or both, the binder 110 and the first layer 102, thereby enhancing durability of the coated article 100 during processing or during use. In such fashion, at least some of the microcapsules 112 can be chemically bonded to either of, or both, the binder 110 and the first layer 102, such that thermal regulating properties that are provided by the microcapsules 112 can be substantially retained even after numerous cycles of wearing and washing. Also, such chemical bonding can facilitate incorporation of a higher loading level as well as a more uniform distribution of the microcapsules 112 within the second layer 104. In addition, a smaller amount of the binder 110 can be required to incorporate a desired loading level of the microcapsules 112, thus allowing for improved breathability, improved drapability, improved flexibility, improved softness, improved visual appearance, improved water absorbency, as well as reduced tendency to produce skin irritations. Thus, for example, a material forming the shells can include a set of carboxy groups, which can chemically bond to a set of hydroxy groups included in the first layer 102. As another example, those carboxy groups included in the shells can chemically bond to a set of amino groups included in the first layer 102. As a further example, a material forming the shells can include a set of functional groups, which can allow cross-linking of the binder 110 by chemically bonding to a complementary set of functional groups included in the binder 110.

Examples of polymers that can be used to form the shells include those with carboxy groups, such as polymers including monomeric units based on acrylic acid or methacrylic acid. For certain implementations, the shells can be formed of a polymer that includes from about 1 to about 100 molar percent of monomeric units that include carboxy groups, such as from about 20 to about 80 molar percent, from about 25 to about 60 molar percent, or from about 40 to about 50 molar percent of the monomeric units. In some instances, it can be desirable to adjust a molar percentage of the monomeric units based on sizes of the microcapsules 112. For example, as a size of an individual one of the microcapsules 112 decreases, an outer surface area of that microcapsule also typically decreases. Thus, to maintain a desired amount of exposed functional groups for chemical bonding, it can be desirable to increase the molar percentage of the monomeric units as the size of that microcapsule decreases. As another example, as a size of an individual one of the microcapsules 112 increases, a weight of that microcapsule also typically increases. Thus, to account for the increasing weight, it can be desirable to increase the molar percentage of the monomeric units as the size of that microcapsule increases. Table 1 provides examples of ranges of the molar percentages as a function of the sizes of the microcapsules 112. Referring to Table 1, the microcapsules 112 are assumed to be spherical for ease of presentation. Similar considerations and molar percentages can also apply to polymers with other types of functional groups.

**Table 1**

| Radius - r (µm) | Surface area - 4πr² (µm²) | Molar percent of monomeric units with carboxy groups |
|---|---|---|
| 0.5 | 3 | 50-60 |
| 1 | 13 | 45-55 |
| 2 | 50 | 40-50 |
| 3 | 113 | 40-50 |
| 4 | 201 | 35-45 |
| 5 | 314 | 35-45 |
| 6 | 452 | 30-40 |
| 7 | 616 | 30-40 |
| 8 | 804 | 25-35 |

Other examples of polymers that can be used to form the shells include those formed of monomers using any suitable polymerization technique. Table 2 below sets forth examples of such monomers that include different types of functional groups.

**Table 2**

| Functional Group | Monomers |
|---|---|
| Carboxy Group | acrylic acid, methacrylic acid, maleic acid, itaconic acid, citraconic acid, vinylacetic acid, p-vinylbenzoic acid, 2-acryloyloxyethylacidphosphate, β-acryloyloxyethyl hydrogen succinnate (or any other anhydride reacted or modified hydroxy group-containing monomer), and any other unsaturated polymerizable carboxylic acid |
| Isocyanate Group | isocyanato methacrylate, monomer supplied as TMI by Cytec Industries, 2-methacryloyloxyethyl isocyanate, acryloyloxyethyl isocyanate, blocked isocyanates such as 2-(0-[1'-methylproplyideneamino]carboxyamino)ethyl methacrylate, and any other unsaturated polymerizable isocyanate |
| Anhydride Group | maleic anhydride, itaconic anhydride, citraconic anhydride, and any other unsaturated polymerizable anhydride |
| Hydroxy Group | CH₂=CR'COO(CH₂)ₙOH, where R' = CH₃ or H, n = 2-4 (e.g., hydroxyethyl methacrylate, hydroxyethyl acrylate, hydroxypropyl methacrylate, hydroxypropyl acrylate, hydroxybutyl methacrylate, and hydroxybutyl acrylate); |
| | CH₂=CR'COO((CH₂)ₙO)_{z}OH, where R' = CH₃ or H, n=1-10, z=1-1,000 (e.g., glycol based acrylates or methacrylates, such as ethyleneglycol methacrylate, ethyleneglycol acrylate, polyethyleneglycol methacrylate, and polyethyleneglycol acrylate); |
| | allyl alcohol; α-ethylallyl alcohol; allylcarbinol; |
| | CH₂=CH-(CH₂)ₘ-O-((CH₂)ₙO)_{z}OH, where m=0-4, n=1-10, z=1-1000 (e.g., glycol based vinyl ethers, such as ethyleneglycol monovinyl ether and polyethyleneglycol monovinyl ether); |
| | CH₂=CH-O-CO-((CH₂)ₙO)_{z}OH, where n=1-10, z=1-1000 (e.g., glycol based vinyl esters, such as ethyleneglycol monovinyl ester and polyethyleneglycol monovinyl ester); and |
| | any other unsaturated polymerizable hydroxy group-containing monomer |
| Epoxy Group | glycidyl methacrylate, glycidyl acrylate, allyl glycidyl ether, 2-vinyloxyethyl glycidyl ether, and any other unsaturated polymerizable epoxy-group containing monomer |
| Amino or N-Substituted Amino Group | acrylamide; methacrylamide; |
| | CH₂=CR'CONHCH₂OX, where R' = CH₃ or H, X = H, methoxy, ethoxy, propoxy, isopropoxy, butoxy, or isobutoxy; and |
| | vinylamine; and any other unsaturated polymerizable amino group-containing monomer |
| Silyl Group | methacryloxypropyltrimethoxysilane, methacryloxypropyltriethoxysilane, methacryloxypropyltributoxysilane, triethoxyvinylsilane, trimethoxyvinylsilane, triacetoxyvinylsilane, triisopropoxyvinylsilane, tris(methoxyethoxy)vinylsilane, and any other unsaturated polymerizable silane |

The selection of the phase change material can be dependent upon a latent heat and a transition temperature of the phase change material. A latent heat of the phase change material typically correlates with its ability to reduce or eliminate heat transfer. In some instances, the phase change material can have a latent heat that is at least about 40 J/g, such as at least about 50 J/g, at least about 60 J/g, at least about 70 J/g, at least about 80 J/g, at least about 90 J/g, or at least about 100 J/g. Thus, for example, the phase change material can have a latent heat ranging from about 40 J/g to about 400 J/g, such as from about 60 J/g to about 400 J/g, from about 80 J/g to about 400 J/g, or from about 100 J/g to about 400 J/g. A transition temperature of the phase change material typically correlates with a desired temperature or a desired range of temperatures that can be maintained by the phase change material. In some instances, the phase change material can have a transition temperature ranging from about -10°C to about 110°C, such as from about 0°C to about 100°C, from about 0°C to about 50°C, from about 10°C to about 50°C, from about 15°C to about 45°C, from about 22°C to about 40°C, or from about 22°C to about 28°C. The selection of the phase change material can be dependent upon other considerations, such as its reactivity or lack of reactivity with a material forming the shells, its resistance to degradation under ambient or processing conditions, its biodegradability, and its toxicity.

For certain implementations, the phase change material can include a linear alkane having n carbon atoms, namely a Cₙ paraffinic hydrocarbon with n being a positive integer. Table 3 provides a list of C₁₃ - C₂₈ paraffinic hydrocarbons that can be used as the phase change material. As can be appreciated, the number of carbon atoms of a paraffinic hydrocarbon typically correlates with its melting point. For example, n-Eicosane, which includes 20 straight chain carbon atoms per molecule, has a melting point of 36.8°C. By comparison, n-Tetradecane, which includes 14 straight chain carbon atoms per molecule, has a melting point of 5.9°C.

**Table 3**

| Paraffinic Hydrocarbon | No. of Carbon Atoms | Melting Point (°C) |
|---|---|---|
| n-Octacosane | 28 | 61.4 |
| n-Heptacosane | 27 | 59.0 |
| n-Hexacosane | 26 | 56.4 |
| n-Pentacosane | 25 | 53.7 |
| n-Tetracosane | 24 | 50.9 |
| n-Tricosane | 23 | 47.6 |
| n-Docosane | 22 | 44.4 |
| n-Heneicosane | 21 | 40.5 |
| n-Eicosane | 20 | 36.8 |
| n-Nonadecane | 19 | 32.1 |
| n-Octadecane | 18 | 28.2 |
| n-Heptadecane | 17 | 22.0 |
| n-Hexadecane | 16 | 18.2 |
| n-Pentadecane | 15 | 10.0 |
| n-Tetradecane | 14 | 5.9 |
| n-Tridecane | 13 | -5.5 |

Depending upon specific characteristics desired for the coated article 100, the second layer 104 can cover from about 1 to about 100 percent of the top surface 106 of the first layer 102. Thus, for example, the second layer 104 can cover from about 20 to about 100 percent, from about 50 to about 100 percent, or from about 80 to about 100 percent of the top surface 106. When thermal regulating properties of the coated article 100 are a controlling consideration, the second layer 104 can cover a larger percentage of the top surface 106. On the other hand, when other properties of the coated article 100 are a controlling consideration, the second layer 104 can cover a smaller percentage of the top surface 106. Alternatively, or in conjunction, when balancing thermal regulating and other properties of the coated article 100, it can be desirable to adjust a thickness of the second layer 104 or a loading level of the microcapsules 112 within the second layer 104.

For certain implementations, the second layer 104 can have a loading level of the microcapsules 112 ranging from about 1 to about 100 percent by dry weight of the microcapsules 112. Thus, for example, the second layer 104 can have a loading level ranging from about 40 to about 90 percent, from about 50 to about 80 percent, or from about 60 to about 70 percent by dry weight of the microcapsules 112. When thermal regulating properties of the coated article 100 are a controlling consideration, the second layer 104 can have a higher loading level of the microcapsules 112. On the other hand, when other properties of the coated article 100 are a controlling consideration, the second layer 104 can have a lower loading level of the microcapsules 112. Alternatively, or in conjunction, when balancing thermal regulating and other properties of the coated article 100, it can be desirable to adjust a thickness of the second layer 104 or a percentage of the top surface 106 that is covered by the second layer 104. It can also be desirable to adjust a phase change material-to-shell weight ratio of the microcapsules 112, such as one ranging from about 10/90 to about 90/10, from about 50/50 to about 90/10, from about 75/25 to about 90/10, or from about 80/20 to about 90/10. In some instances, the second layer 104 can be formed so as to include an additional set of microcapsules (not illustrated in FIG. 1) that are dispersed in the binder 110. These additional microcapsules can differ in some fashion from the microcapsules 112, such as by having different shapes or sizes, by including shells formed of a different material or including different functional groups, or by containing a different phase change material. It is contemplated that at least some of these additional microcapsules can be chemically bonded to the binder 110, one or more of the microcapsules 112, the first layer 102, or a combination thereof.

In some instances, the second layer 104 can be formed so as to provide substantially uniform characteristics across the top surface 106 of the first layer 102. Thus, as illustrated in FIG. 1, the microcapsules 112 are substantially uniformly distributed within the second layer 104. Such uniformity in distribution of the microcapsules 112 can serve to inhibit heat from being preferentially and undesirably conducted across a portion of the coated article 100 that includes a lesser density of the microcapsules 112 than another portion. Such uniformity in distribution can also provide a more even feel to the coated article 100. However, depending upon specific characteristics desired for the coated article 100, the distribution of the microcapsules 112 can be varied within one or more portions of the second layer 104. Thus, for example, the microcapsules 112 can be concentrated in one or more portions of the second layer 104 or distributed in accordance with a concentration profile along one or more directions within the second layer 104.

During formation of the coated article 100, an aqueous or non-aqueous coating composition can be formed by mixing the binder 110 with the microcapsules 112, which can be provided in a dry, powdered form. For certain implementations, the binder 110 can be provided in an emulsified form, which allows for homogeneous solution mixing of the binder 110 and the microcapsules 112 in a solvent (e.g., water) while their functional groups remain unreacted. Once the coating composition is applied to the first layer 102, chemical bonding between complementary functional groups can be triggered by drying, heating, or otherwise removing the solvent. Use of the binder 110 in the emulsified form can also allow mixing of ingredients that are water insoluble or that are slightly water soluble.

In some instances, a set of catalysts can be added when forming the coating composition. Such catalysts can facilitate chemical bonding between complementary functional groups, such as between those included in the binder 110 and those included in the microcapsules 112 or between those included in the first layer 102 and those included in the microcapsules 112. Examples of materials that can be used as catalysts include boron salts, hypophosphite salts (e.g., ammonium hypophosphite and sodium hypophosphite), phosphate salts, tin salts (e.g., salts of Sn⁺² or Sn⁺⁴, such as dibutyl tin dilaurate and dibutyl tin diacetate), and zinc salts (e.g., salts of Zn⁺²). A desirable amount of a tin salt or a zinc salt that is added to the coating composition can range from about 0.001 to about 1.0 percent by dry weight, such as from about 0.01 to about 0.1 percent by dry weight. A desirable amount of a boron salt or a phosphate salt that is added to the coating composition can range from about 0.1 to about 5 percent by dry weight, such as from about 1 to about 3 percent by dry weight. Other examples of materials that can be used as catalysts include alkylated metals, metal salts, metal halides, and metal oxides, where suitable metals include Sn, Zn, Ti, Zr, Mn, Mg, B, Al, Cu, Ni, Sb, Bi, Pt, Ca, and Ba. Organic acids and bases, such as those based on sulfur (e.g., sulfuric), nitrogen (e.g., nitric), phosphorous (e.g., phosphoric), or halides (e.g., F, Cl, Br, and I), can also be used as catalyst. Further examples of materials that can be used as catalysts include acids such as citric acid, itaconic acid, lactic acid, fumaric acid, and formic acid.

For certain implementations, a set of reactive components or modifiers can also be added when forming the coating composition. Such modifiers can allow cross-linking of the binder 110 to provide improved properties, such as durability and other properties. Examples of materials that can be used as modifiers include polymers, such as melamine-formaldehyde resins, urea-formaldehye resins, polyanhydrides, and polyamines. A desirable amount of a modifier that is added to the coating composition can range from about 1 to about 10 percent by dry weight, such as from about 1 to about 5 percent by dry weight. Also, a set of additives can be added when forming the coating composition. In some instances, these additives can be contained within the microcapsules 112 or within an additional set of microcapsules (not illustrated in FIG. 1) that are dispersed in the binder 110. It is contemplated that at least some of these additional microcapsules can be chemically bonded to the binder 110, one or more of the microcapsules 112, the first layer 102, or a combination thereof. Examples of additives include those that improve water absorbency, water wicking ability, water repellency, stain resistance, dirt resistance, and odor resistance. Additional examples of additives include anti-microbials, flame retardants, surfactants, dispersants, and thickeners. Further examples of additives are set forth below in Table 4.

**Table 4**

| Property | Additives |
|---|---|
| Moisture Management and Grease Resistance | hydrophilic and polar materials, such as including or based on acids, glycols, salts, hydroxy group-containing materials (e.g., natural hydroxy group-containing materials), ethers, esters, amines, amides, imines, urethanes, sulfones, sulfides, natural saccharides, cellulose, sugars, and proteins. |
| Water Resistance, Dirt Resistance, and Stain Resistance | non-functional, non-polar, and hydrophobic materials, such as fluorinated compounds, silicon-containing compounds, hydrocarbons, polyolefins, and fatty acids. |
| Anti-microbial, Anti-fungal and AntiBacterial | complexing metallic compounds based on metals (e.g., silver, zinc, and copper), which cause inhibition of active enzyme centers. |
| | copper and copper-containing materials (e.g., salts of Cu⁺² and Cu⁺), such as those supplied by Cupron Ind. |
| | silver and silver-containing materials and monomers (e.g., salts of Ag, Ag⁺, and Ag⁺²), such as supplied as ULTRA-FRESH by Thomson Research Assoc. Inc. and as SANITIZED Silver and Zinc by Clariant Corp. |
| | oxidizing agents, such as including or based on aldehydes, halogens, and proxy compounds that attack cell membranes (e.g., supplied as HALOSHIELD by Vanson HaloSource Inc.) |
| | 2,4,4'-trichloro-2'-hydroxy dipenyl ether (e.g., supplied as TRICLOSAN), which inhibits growth of microorganisms by using an electro-chemical mode of action to penetrate and disrupt their cell walls. |
| | quaternary ammonium compounds, biguanides, amines, and glucoprotamine (e.g., quaternary ammonium silanes supplied by Aegis Environments or as SANITIZED QUAT T99-19 by Clariant Corp. and biguanides supplied as PURISTA by Avecia Inc.) |
| | chitosan |
| | castor oil derivatives based on undecylene acid or undecynol (e.g., undecylenoxy polyethylene glycol acrylate or methacrylate). |

Once formed, the coating composition can be applied to or deposited on the top surface 106 of the first layer 102 using any suitable coating technique. Thus, for example, the coating composition can be applied using padding; spray coating, such as air atomized spraying, airless atomized spraying, or electrostatic spraying; knife-over-roll coating; slot die coating; foam coating; or screenprint coating. After the coating composition is applied to the top surface 106, the coating composition can be cured, dried, cross-linked, reacted, or solidified to form the second layer 104.

In case of padding, for example, a fabric can be dipped and saturated in the coating composition, which can include from about 5 to about 25 percent by weight of total solids (e.g., the microcapsules 112, the binder 110, and any catalysts), such as from about 10 to about 20 percent by weight of total solids. Excess solution can be removed by treating with nip rolls, which can operate at a pressure ranging from about 5 pounds per square inch ("psi") to about 45 psi, such as from about 5 psi to about 30 psi or from about 5 psi to about 15 psi. Next, the padded fabric can be dried for about 1 to about 5 minutes, such as for about 2 to about 3 minutes, at a temperature ranging from about 80°C to about 120°C, such as from about 90°C to about 100°C. The dried padded fabric can then be cured for about 1 to about 5 minutes, such as for about 2 to about 3 minutes, at a temperature ranging from about 150°C to about 180°C, such as from about 150°C to about 165°C. Drying and curing can be performed using any suitable thermal technique, such as by using high intensity infrared irradiation, by using a standard gas fired curing oven, by using a standard electrically heated curing oven, or a combination thereof.

In the case of spray coating, a fabric can be sprayed with the coating composition, which can include from about 5 to about 25 percent by weight of total solids, such as from about 10 to about 20 percent by weight of total solids. In some instances, the coating composition can be sprayed on the fabric to yield from about 50 to about 200 percent by weight of wet pick-up, such as from about 50 to about 100 percent by weight of wet pick-up. Spraying can be accomplished using a set of nozzle tips having sizes ranging from about 10 microns to about 50 microns, such as from about 20 microns to about 40 microns. Desirably, the coating composition can be atomized using an air pressure ranging from about 10 psi to about 50 psi, such as from about 10 psi to about 20 psi. The coating composition can be pumped from a holding tank or through a set of spray lines and nozzles, either by air pressure or by a mechanical pump (e.g., a diaphragm pump). The sprayed fabric can then be cured as described above in connection with padding. In the case of a sprayed finished garment, curing can also be performed in a standard home laundry tumble dryer, where the garment can be tumbled to dryness for about 20 minutes to about 60 minutes, such as for about 30 minutes to about 45 minutes, at a temperature ranging from about 50°C to about 120°C, such as from about 65°C to about 110°C. The use of such a tumble dryer can provide a curing process that is relatively long and slow, thereby facilitating chemical bonding between complementary functional groups. In addition, the use of such a tumble dryer can provide improved softness for a superior hand and feel.

In case of screenprint coating, the coating composition can be applied using a screen of about 100 mesh to yield about 10 percent by weight of dry add-on. Curing can be performed for about 3 minutes to about 10 minutes, such as for about 3 minutes to about 5 minutes, at a temperature ranging from about 140°C to about 170°C, such as from about 140°C to about 160°C.

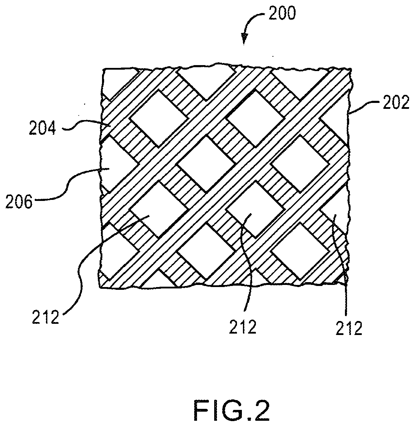

Attention next turns to FIG. 2, which illustrates a coated article 200 that is implemented in accordance with another embodiment of the invention. In particular, FIG. 2 illustrates a top, sectional view of the coated article 200, which includes a first layer 202 and a second layer 204 that is adjacent to the first layer 202.

Certain features of the coated article 200 are implemented in a similar fashion as previously described in connection with FIG. 1 and, thus, need not be further described in detail. Thus, for example, the first layer 202 is implemented as a substrate and is formed of any suitable material, such as a fibrous material or a polymer. Also, the second layer 204 is implemented as a coating and is formed of a binder (not illustrated in FIG. 2) and a set of microcapsules (not illustrated in FIG. 2) that are dispersed in the binder.

As illustrated in FIG. 2, the second layer 204 is formed in a criss-cross pattern. This criss-cross pattern includes a first set of spaced apart coating regions (e.g., coating strips) that intersect a second set of spaced apart coating regions at an angle. In the illustrated embodiment, the coating strips of the first set are substantially parallel and evenly spaced from one another, and the coating strips of the second set are also substantially parallel and evenly spaced from one another. The coating strips of the first and second set intersect at an angle of about 90 degrees to create regions of discontinuity 212 that are substantially diamond-shaped or square-shaped (i.e., as seen from the top view of FIG. 2), and that are distributed across a top surface 206 of the first layer 202. If desired, a spacing, width, or intersection angle of the coating strips can be varied to adjust a spacing, shapes, or sizes of the regions of discontinuity 212. Depending on particular characteristics desired for the coated article 200 or a specific coating technique that is used, a thickness of the coating strips can be substantially uniform or can vary across the top surface 206. In the illustrated embodiment, the thickness of the coating strips can be up to about 20 mm, such as from about 0.1 mm to about 20 mm, and, typically, the thickness of the coating strips can be up to about 2 mm, such as from about 0.1 mm to about 2 mm.

In the illustrated embodiment, the regions of discontinuity 212 are separated from one another and expose a remaining portion of the top surface 206 that is not covered by the second layer 204. In such manner, the regions of discontinuity 212 can provide improved properties, such as improved breathability, improved drapability, improved flexibility, improved softness, improved water absorbency, as well as reduced tendency to produce skin irritations. For example, the regions of discontinuity 212 can provide improved flexibility by facilitating bending of the coated article 200 along a line that intersects one or more of the regions of discontinuity 212. Also, by exposing the remaining portion of the top surface 206, the regions of discontinuity 212 can allow contact with the first layer 202 to provide an overall improvement in softness for the coated article 200. In addition, the regions of discontinuity 212 can serve as passageways or openings to facilitate transport of air or water vapor through the coated article 200, thereby providing an improvement in breathability.

It should be recognized that the second layer 204 can be formed in various other regular or irregular patterns and with the regions of discontinuity 212 having various other shapes and sizes. By way of example, the second layer 204 can be formed in a honeycomb pattern (e.g., with the regions of discontinuity 212 having hexagonal shapes), a grid pattern (e.g., with the regions of discontinuity 212 having square or rectangular shapes), or a random pattern (e.g., with the regions of discontinuity 212 distributed randomly). In general, the regions of discontinuity 212 can be distributed across the top surface 206 at intervals that are regularly spaced or not regularly spaced. The regions of discontinuity 212 can be formed with various regular or irregular shapes, such as circular, half-circular, diamond-shaped, hexagonal, multi-lobal, octagonal, oval, pentagonal, rectangular, square-shaped, star-shaped, trapezoidal, triangular, and wedge-shaped. If desired, one or more of the regions of discontinuity 212 can be shaped as logos, letters, or numbers. The regions of discontinuity 212 can have sizes (i.e., as seen from the top view of FIG. 2) up to about 100 mm, such as from about 0.1 mm to about 100 mm, and will typically have sizes ranging from about 1 mm to about 10 mm. In general, the regions of discontinuity 212 can have the same shape or different shapes, and can have the same size or different sizes.

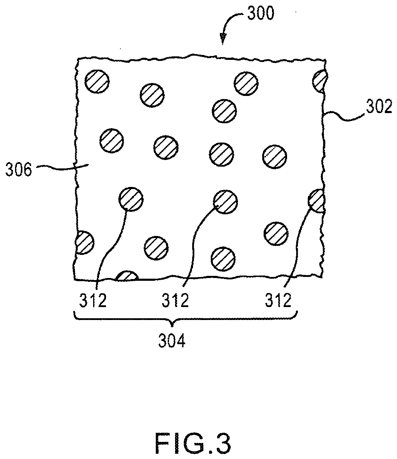

Turning next to FIG. 3, a coated article 300 that is implemented in accordance with a further embodiment of the invention is illustrated. In particular, FIG. 3 illustrates a top, sectional view of the coated article 300, which includes a first layer 302 and a second layer 304 that is adjacent to the first layer 302.

As with the coated article 200, certain features of the coated article 300 are implemented in a similar fashion as previously described in connection with FIG. 1 and, thus, need not be further described in detail. Thus, for example, the first layer 302 is implemented as a substrate and is formed of any suitable material, such as a fibrous material or a polymer. Also, the second layer 304 is implemented as a coating and is formed of a binder (not illustrated in FIG. 3) and a set of microcapsules (not illustrated in FIG. 3) that are dispersed in the binder.

Referring to FIG. 3, the second layer 304 is formed in a dot pattern. In particular, the second layer 304 is formed as a set of coating regions 312 that are substantially circular (i.e., as seen from the top view of FIG. 3), and that are distributed across a top surface 306 of the first layer 302. In the illustrated embodiment, the coating regions 312 are distributed in a substantially random manner across the top surface 306. Depending on the particular characteristics desired for the coated article 300 or a specific coating technique that is used, a thickness of an individual one of the coating regions 312 can be uniform or non-uniform. In the illustrated embodiment, a thickness of an individual one of the coating regions 312 can be up to about 20 mm, such as from about 0.1 mm to about 20 mm, and will typically be up to about 2 mm, such as from about 0.1 mm to about 2 mm.

As illustrated in FIG. 3, the coating regions 312 are separated from one another and expose a remaining portion of the top surface 306 that is not covered by the second layer 304. In such manner, separation of the coating regions 312 can provide improved properties, such as improved breathability, improved drapability, improved flexibility, improved softness, improved water absorbency, as well as reduced tendency to produce skin irritations. For example, this separation can provide improved flexibility by facilitating bending of the coated article 300. Also, by exposing the remaining portion of the top surface 306, this separation can allow contact with the first layer 302 to provide an overall improvement in softness for the coated article 300. In addition, this separation can provide passageways or openings to facilitate transport of air or water vapor through the coated article 300, thereby providing an improvement in breathability.

Depending on the particular characteristics desired for the coated article 300 or a specific coating technique that is used, a spacing, shapes, or sizes of the coating regions 312 can be varied from that illustrated in FIG. 3. In general, the coating regions 312 can be distributed across the top surface 306 at intervals that are regularly spaced or not regularly spaced. For example, instead of the random distribution illustrated in FIG. 3, the coating regions 312 can be positioned at intersection points of an imaginary grid or any other two-dimensional network. The coating regions 312 can be formed with various regular or irregular shapes, such as circular, half-circular, diamond-shaped, hexagonal, multi-lobal, octagonal, oval, pentagonal, rectangular, square-shaped, star-shaped, triangular, trapezoidal, and wedge-shaped. If desired, one or more of the coating regions 312 can be shaped as logos, letters, or numbers. The coating regions 312 can have sizes (i.e., as seen from the top view of FIG. 3) up to about 10 mm, such as from about 0.1 mm up to about 10 mm, and will typically have sizes ranging from about 1 mm to about 4 mm. In general, the coating regions 312 can have the same shape or different shapes, and can have the same size or different sizes.

### Examples

The following examples describe specific features of some embodiments of the invention to illustrate and provide a description for those of ordinary skill in the art. The examples should not be construed as limiting the invention, as the examples merely provide specific methodology useful in understanding and practicing some embodiments of the invention.

### Example 1

Six different coating compositions were prepared using ingredients set forth in Table 5 below. Polymer A (supplied as 8650 epoxy silicon (100% solids) by Dow Corning Corp.) and polymer B (supplied as SM8715 EX epoxy silicon (40% solids) by Dow Corning Corp.) were silicon-containing polymers with epoxy groups. Polymer C (supplied as Q2-8818 amine silicon (40% solids) by Dow Corning Corp.) was a silicon-containing polymer with amine groups. Polymer D (supplied as BAYHYDUR VPLS 2336 isocyanate (100% solids) by Bayer Chemicals Inc.) was a polyol with isocyanate groups. Polymer E (supplied as SILSURF J100 hydrophilic silicon (100% solids) by Siltech Corp.) was a silicon-containing polyether with hydroxy groups. The microcapsules ((45% solution) supplied by Ciba Specialty Chemicals) included shells with carboxy groups that contained a phase change material.

**Table 5**

| Ingredients | Composition 1 | Composition 2 | Composition 3 | Composition 4 | Composition 5 | Composition 6 |
|---|---|---|---|---|---|---|
| | (% by weight) | (% by weight) | (% by weight) | (% by weight) | (% by weight) | (% by weight) |
| Polymer A | 16.0 | 16.0 | 16.0 | | | |
| Polymer B | | | 27.0 | 27.0 | 27.0 | |
| Polymer C | | | | | | 20.0 |
| Polymer D | | | | | | 5.0 |
| Polymer E | | | 1.5 | | 1.5 | |
| Dibutyl Tin Dilaurate | 0.1 | | | | | |
| Sodium Hypophosphite | | | 0.5 | 0.5 | | |
| Microcapsules | 80.0 | 80.0 | 60.0 | 60.0 | 60.0 | 60.0 |
| Water | 3.9 | 4.0 | 11.0 | 12.5 | 11.5 | 15.0 |
| **Total** | **100** | **100** | **100** | **100** | **100** | **100** |

The coating compositions were prepared by mixing the ingredients with a paddle blade mixer. The coating compositions were reduced with water to about 15 percent by weight of total solids and then applied to various fabrics, which included a 4.5 ounces per square yard ("osy") woven brushed 100 percent polyester fabric and a 3.2 osy knitted 100 percent cotton fabric.

Coating compositions 1 through 5 were applied to respective fabrics via padding, which included dipping and saturating each of the fabrics into one of the coating compositions, squeezing out excess solution by passing through nip rolls operating at a pressure of about 30 psi, drying for about 3 minutes at about 110°C, and then curing for about 1 minute at about 170°C. Padding yielded between about 60 to about 100 percent by weight of wet pick-up and, after curing, between about 8 to about 12 percent by weight of dry add-on. Coating composition 6 was sprayed onto a cotton fabric to yield about 131 percent by weight of wet pick-up. The sprayed fabric was then placed in a standard home tumble dryer and dried for about 30 minutes on high heat, yielding about 18 percent by weight of dry add-on

Measurements of properties of the resulting coated fabrics were performed in accordance with various test protocols. For comparison purposes, measurements were also made of control fabrics 1 through 3. Control fabric 1 was a 2.0 osy silk taffeta fabric, control fabric 2 was a 6.0 osy 330 denier CORDURA fabric, and control fabric 3 (supplied by Outlast Technologies, Inc.) was a 2.0 osy woven polyester suit lining fabric that was covered with a 1.0 osy polyacrylic coating including 65 percent by dry weight of microcapsules (20 micron diameter) containing a phase change material. Results of the measurements are set forth in Table 6 below.

**Table 6**

| | Latent Heat (J/g) | Drapability (1 to 10) | Flexibility (mm at bend) | Durability (% loss of latent heat) | TRF | Water Absorbency (sec) | Visual Appearance |
|---|---|---|---|---|---|---|---|
| Coated Fabric Composition 1 | 8.5 | 7 | 9.5 | 9 % | 0.41 | 5 | No coating visually detected |
| Coated Fabric Composition 2 | 9.0 | 7 | 8.0 | 44 % | 0.39 | 6 | No coating visually detected |
| Coated Fabric Composition 3 | 9.9 | 8 | 11.0 | 19 % | 0.37 | 1 | No coating visually detected |
| Coated Fabric Composition 4 | 10.4 | 8 | 11.5 | 21 % | 0.31 | 60+ | No coating visually detected |
| Coated Fabric Composition 5 | 10.1 | 8 | 10.5 | 54 % | 0.31 | 1 | No coating visually detected |
| Coated Fabric Composition 6 | 18.7 | 7 | 10.0 | 8 % | 0.25 | 11 | No coating visually detected |
| Control Fabric 1 | 0.0 | 10 | 2.0 | N/A | 0.61 | 1 | N/A |
| Control Fabric 2 | 0.0 | 1 | 40.0 | N/A | 0.54 | 54 | N/A |
| Control Fabric 3 | 22.0 | 4 | 19.0 | 21 % | 0.21 | 13 | Coating visually detected |

Referring to Table 6, latent heat measurements were performed in a standard fashion using a Differential Scanning Calorimeter. Dynamic thermal measurements were performed as described in the patent of Hittle et al., U.S. Patent 6,408,256, entitled "Apparatus and Method for Thermal Evaluation of any Thin Material," and American Society for Testing and Materials ("ASTM") D7024-04 - Standard Test Method for Steady State and Dynamic Thermal Performance of Textile Materials. . In particular, the dynamic thermal measurements were performed using a dynamic flux setting of 50 + 25 W/m² and a cycle time of about 363 seconds. Results of the dynamic thermal measurements were expressed as a Temperature Regulating Factor ("TRF"). As can be appreciated, the TRF has a value that ranges from 0 to 1, with 0 being indicative of complete thermal buffering, and 1 being indicative of an absence of thermal buffering.

Drapability measurements were performed by a panel of individuals, who judged the fabrics on a scale of 1 to 10, with 1 being indicative of poor drapability, and 10 being indicative of superior drapability. Similarly, visual appearance of the fabrics was judged based on whether coatings on the fabrics could be visually detected.

Flexibility measurements were performed as described in ASTM D5732 - Standard Test Method for Stiffness of Nonwoven Fabrics Using the Cantilever Test. In particular, the flexibility measurements were performed by sliding each fabric across a horizontal support platform at a controlled rate so that one end overhangs the support platform. As an overhang length increased, the fabric bent downward. When a downward bend angle reached 41.50 degrees, the overhang length was measured. The overhang length, a mass of the fabric, and dimensions of the fabric were then used to calculate a bending length, with a smaller bending length being indicative of a greater flexibility.

Durability measurements were performed as described in American Association of Textile Chemists and Colorists ("AATCC") Test Method 150-1995. In particular, the durability measurements were performed by subjecting each fabric to 10 home laundry cycles and measuring a percentage loss of latent heat after those 10 cycles, with a smaller percentage loss being indicative of a greater durability.

Water absorbency measurements were performed as described in AATCC Test Method 79-1995. In particular, the water absorbency measurements were performed by placing a certain amount of water (e.g., a drop of water) on each fabric and measuring an amount of time for a specular reflection of the water to disappear, with a smaller amount of time being indicative of a greater water absorbency.

As can be appreciated by referring to Table 6, the fabrics coated using coating compositions 1 through 6 exhibited a number of desirable properties, including latent heats that are greater than 8 J/g, TRFs that are smaller than 0.5, bending lengths that are smaller than 12 mm, and water absorption times that are typically smaller than 10 seconds. Also, the fabrics coated using coating compositions 1, 3, 4, and 6 exhibited percentages loss of latent heat that are no greater than 21 percent. In addition, the fabrics coated using coating compositions 1 through 6 exhibited excellent drapability and improved visual appearance as compared with control fabric 3.

### Example 2

A skin irritation study of certain coated fabrics was performed in accordance with a test protocol. The coated fabrics included a polyester fabric that was pad coated with coating composition A, which was prepared using ingredients similar to those of coating composition 3 of Example 1, and a cotton fabric that was spray coated with coating composition B, which was prepared using ingredients similar to those of coating composition 6 of Example 1. For comparison purposes, the study also included control fabrics A through C. Control fabric A was an untreated polyester fabric, control fabric B was an untreated cotton fabric, and control fabric C was a fabric coated using a standard coating composition. One hundred twelve human subjects were used in the study. One sample of each type of fabric was applied and taped onto the back of a human subject. A fresh sample was applied each day for 10 days to the same location, and skin reaction was evaluated for any acute and long-term reaction.

Table 7 below sets forth results of a total of 1120 induction phase readings (i.e., based on total number of human subjects x 10 readings per human subject). The results are expressed on the basis of the following scale: 0 - no skin reaction; 1 - presence of erythema (e.g., redness of skin) in patched area; 2 - presence of erythema and edema (e.g., abnormal buildup of serous fluid between tissue cells) in patched area; 3 - presence of erythema, edema, and vesicles (e.g., fluid filled cyst) in patched area; 4 - presence of erythema, edema, and bullae (e.g., blisters) in patched area; and X - severe skin irritation and discontinued use of sample. As can be appreciated by referring to Table 7, the fabrics coated using coating compositions A and B did not produce any observable skin irritation on any of the human subjects, while control fabric C produced slight irritation on three human subjects, with two of these three human subjects advancing to severe skin irritation.

**Table 7**

| # | Description | Skin Reactions | | | | |
|---|---|---|---|---|---|---|
| | | **1** | **2** | **3** | **4** | **X** |
| 1 | Pad Coated Polyester Fabric | 0 | 0 | 0 | 0 | 0 |
| | Composition A | | | | | |
| 2 | Control Fabric A | 0 | 0 | 0 | 0 | 0 |
| | Untreated Polyester Fabric | | | | | |
| 3 | Spray Coated Cotton Fabric | 0 | 0 | 0 | 0 | 0 |
| | Composition B | | | | | |
| 4 | Control Fabric B | 2 | 0 | 0 | 0 | 0 |
| | Untreated Cotton Fabric | | | | | |
| 5 | Control Fabric C | 3 | 2 | 2 | 0 | 2 |

It should be recognized that the embodiments of the invention described above are provided by way of example, and various other embodiments are contemplated. For example, while some embodiments of the invention have been described with reference to microcapsules including reactive functional groups, it is contemplated that other embodiments of the invention can be implemented using microcapsules lacking such reactive functional groups. For such other embodiments, it can be desirable that a binder include a silicon-containing polymer with epoxy groups, a polyglycol with epoxy groups, a hydrocarbon resin with epoxy groups, or any other polymer with epoxy groups.

It is contemplated that some embodiments of the invention can be implemented using other types of containment structures in place of, or in conjunction, with microcapsules. In general, containment structures can be used to contain, absorb, or react with a phase change material, and can include reactive functional groups to allow chemical bonding. In some instances, containment structures can be provided as microparticles having various shapes, and having sizes ranging from about 0.1 to about 1,000 microns, such as from about 0.1 to about 500 microns, from about 0.1 to about 100 microns, from about 1 to about 15 microns, from about 1 to about 10 microns, from about 1 to about 5 microns, or from about 2 to about 3 microns. For certain implementations, it can be desirable that a substantial fraction, such as at least 50 percent, at least 60 percent, at least 70 percent, or at least 80 percent, of the microparticles have sizes within a specified range, such as from about 1 to about 15 microns or from about 1 to about 5 microns. It can also be desirable that the microparticles are monodisperse with respect to either of, both, their shapes and sizes. Examples of microparticles include silica microparticles, such as precipitated silica microparticles or fumed silica microparticles, zeolite microparticles, carbon microparticles, such as graphite microparticles or activated carbon microparticles, and microparticles formed of absorbent or superabsorbent materials. Further examples of microparticles include microcapsules as described herein.

One of ordinary skill in the art requires no additional explanation in developing the coated articles described herein but may nevertheless find some helpful guidance regarding formation of microcapsules by examining the following references: the patent of Tsuei et al., U.S. Patent No. 5,589,194, entitled "Method of Encapsulation and Microcapsules Produced Thereby;" the patent of Tsuei, et al., U.S. Patent No. 5,433,953, entitled "Microcapsules and Methods for Making Same;" the patent of Hatfield, U.S. Patent No. 4,708,812, entitled "Encapsulation of Phase Change Materials;" and the patent of Chen et al., U.S. Patent No. 4,505,953, entitled "Method for Preparing Encapsulated Phase Change Materials". One of ordinary skill in the art may also find some helpful guidance regarding implementation of discontinuous coatings by examining the patent application of Brice et al., U.S. Patent Application Publication No. 2004/0033743, entitled "Coated Articles Having Enhanced Reversible Thermal Properties and Exhibiting Improved Flexibility, Softness, Air Permeability, or Water Vapor Transport Properties".

While the invention has been described with reference to the specific embodiments thereof, it should be understood by those skilled in the art that various changes may be made and equivalents may be substituted without departing from the true spirit and scope of the invention as defined by the appended claims. In addition, many modifications may be made to adapt a particular situation, material, composition of matter, method, operation or operations, to the objective, spirit and scope of the invention. All such modifications are intended to be within the scope of the claims appended hereto. In particular, while the methods disclosed herein may have been described with reference to particular operations performed in a particular order, it will be understood that these operations may be combined, sub-divided, or reordered to form an equivalent method without departing from the teachings of the invention. Accordingly, unless specifically indicated herein, the order and grouping of the operations is not a limitation of the invention.

## Claims

1. A coated article (100, 200, 300), comprising:
a substrate; and
a coating covering at least a portion of the substrate and including:
a binder (110); and
a plurality of microcapsules (112) having sizes in the range of 1 micron to 15 microns, , **characterized in that** the binder (110) has a glass transition temperature in the range of -110°C to -40°C, **in that** at least one of the plurality of microcapsules (112) being chemically bonded to at least one of the substrate and the binder (110) and **in that** at least one of the plurality of microcapsules (112) is covalently bonded via at least one of an amide group, an ester group, an ether group, an urea group, and an urethane group.

2. The coated article (100, 200, 300) of claim 1, wherein the binder (110) is a silicon-containing polymer that includes a set of epoxy groups.

3. The coated article (100, 200, 300) of claim 2, wherein the silicon-containing polymer includes from 0.2 percent to 5 percent by weight of the set of epoxy groups.

4. The coated article (100, 200, 300) of claim 1, wherein the binder (110) is a polyol that includes a set of isocyanate groups.

5. The coated article (100, 200, 300) of claim 4, wherein the polyol includes from 5 percent to 30 percent by weight of the set of isocyanate groups.

6. The coated article (100, 200, 300) of claim 1, wherein at least one of the plurality of microcapsules (112) is chemically bonded to both the substrate and the binder (110).

7. The coated article (100, 200, 300) of claim 1, wherein the plurality of microcapsules (112) are monodisperse with respect to their sizes.

8. The coated article (100, 200, 300) of claim 1, wherein the plurality of microcapsules (112) contain a phase change material having a latent heat of at least 40 J/g and a transition temperature in the range of 0°C to 50°C.

9. The coated article (100, 200, 300) of one of the preceding claims, wherein the coating comprises a catalyst to facilitate said chemical bonding.

10. The coated article (100, 200, 300) of claim 8, or claim 9 when dependent on claim 8 , wherein the coating is adjacent to the substrate and the plurality of microcapsules (112) is dispersed in the binder (110), at least one of the plurality of microcapsules (112) including a shell defining an internal compartment and including a set of functional groups to chemically bond to at least one of the substrate and the binder.

11. The coated article (100, 200, 300) of claim 10, wherein the binder (110) is cross-linked via the shell of at least one of the plurality of microcapsules (112).

12. The coated article (100, 200, 300) of of claim 10, wherein the set of functional groups include at least one of an acid anhydride group, an aldehyde group, an amino group, a N-substituted amino group, a carbonyl group, a carboxy group, an epoxy group, an ester group, an ether group, a glycidyl group, a hydroxy group, an isocyanate group, a thiol group, a disulfide group, and a silyl group.

13. The coated article (100, 200, 300) of claim 10, wherein the phase change material includes a linear alkane having from 14 to 23 carbon atoms.

## Patentansprüche

1. Beschichteter Artikel (100, 200, 300) aufweisend:
ein Substrat; und
eine Beschichtung, die wenigstens einen Abschnitt des Substrats bedeckt und umfasst:
ein Bindemittel (110); und
eine Vielzahl von Mikrokapseln (112), deren Größe im Bereich von 1 Mikron bis 15 Mikron liegt,
**dadurch gekennzeichnet, dass**
das Bindemittel (110) eine Glasübergangstemperatur in dem Bereich von -110ºC bis -40ºC hat, und das wenigstens eine der Vielzahl von Mikrokapseln (112) chemisch mit dem wenigstens einen Substrat und dem Bindemittel (110) verbunden ist und dadurch, dass wenigstens eine Vielzahl von Mikrokapseln (112) kovalent über wenigstens eine Amidgruppe, eine Estergruppe, eine Ethergruppe, eine Ureagruppe, oder eine Urethangruppe verbunden ist.

2. Beschichteter Artikel (100, 200, 300) nach Anspruch 1, wobei das Bindemittel (110) ein silikon-enthaltendes Polymer ist, was einen Satz von Epoxygruppen umfasst.

3. Beschichteter Artikel (100, 200, 300) nach Anspruch 2, wobei das silikonenthaltende Polymer von 0,2 Gewichtsprozent bis 5 Gewichtsprozent des Satzes von Epoxygruppen umfasst.

4. Beschichteter Artikel (100, 200, 300) des Anspruchs 1, wobei das Bindemittel (110) ein Polyol ist, das einen Satz isocyanter Gruppen umfasst.

5. Beschichteter Artikel (100, 200, 300) nach Anspruch 4, wobei das Polyol von 5 Gewichtsprozent bis 30 Gewichtsprozent des Satzes isocyanter Gruppen umfasst.

6. Beschichteter Artikel (100, 200, 300) nach Anspruch 1, wobei wenigstens eine der Vielzahl von Mikrokapseln (112) chemisch sowohl mit dem Substrat als auch dem Bindemittel (110) verbunden ist.

7. Beschichteter Artikel (100, 200, 300) nach Anspruch 1, wobei die Vielzahl von Mikrokapseln (112) monodispers bezüglich ihrer Größen sind.

8. Beschichteter Artikel (100, 200, 300) nach Anspruch 1, wobei die Vielzahl von Mikrokapseln (112) ein Phasenwechselmaterial umfasst, das eine latente Wärme von wenigstens 40 J/g und eine Übergangstemperatur in dem Bereich von 0ºC bis 50ºC hat.

9. Beschichteter Artikel (100, 200, 300) nach einem der vorhergehenden Ansprüche, wobei die Beschichtung einen Katalysator umfasst, um die chemische Bindung zu erleichtern.

10. Beschichteter Artikel (100, 200, 300) nach Anspruch 8 oder Anspruch 9, wenn dieser von Anspruch 8 abhängig ist, wobei die Beschichtung neben dem Substrat liegt und die Vielzahl von Mikrokapseln (112) in dem Bindemittel (110) dispergiert ist, wobei wenigstens eine der Vielzahl von Mikrokapseln (112) eine Schale umfasst, die eine interne Abteilung definiert und einen Satz funktionaler Gruppen umfasst, um wenigstens mit dem Substrat oder dem Bindemittel chemisch verbunden zu sein.

11. Beschichteter Artikel (100, 200, 300) nach Anspruch 10, wobei das Bindemittel (110) über die Schale der wenigstens einen der Vielzahl von Mikrokapseln (112) querverbunden ist.

12. Beschichteter Artikel (100, 200, 300) nach Anspruch 10, wobei der Satz funktionaler Gruppen wenigstens eine Acid anhydride Gruppe, eine Aldehydgruppe, eine Aminogruppe, eine N-subsituierte Aminogruppe, eine Carbonylgruppe, eine Carboxygruppe, eine Epoxygruppe, eine Estergruppe, eine Ethergruppe, eine Glycidylgruppe, eine Hydroxygruppe, eine Isocyanatgruppe, eine Thiolgruppe, eine Disulfidgruppe oder eine Silylgruppe umfasst.

13. Beschichteter Artikel (100, 200, 300) nach Anspruch 10, wobei das Phasenwechselmaterial ein lineares Alkan umfasst, das 14 bis 23 Karbonatome hat.

## Revendications

1. Article enduit (100, 200, 300) comprenant :
un substrat ; et
un revêtement recouvrant au moins une partie du substrat et comprenant:
un liant (110) ; et
une pluralité de microcapsules (112) ayant des tailles dans la plage de 1 micron à 15 microns, **caractérisé en ce que** le liant (110) a une température de transition vitreuse dans la plage de -110°C à -40°C, **en ce qu'**au moins une de la pluralité de microcapsules (112) est chimiquement liée à au moins l'un du substrat et du liant (110) et **en ce qu'**au moins une de la pluralité de microcapsules (112) est liée de manière covalente au moyen d'au moins un d'un groupe amide, d'un groupe ester, d'un groupe éther, d'un groupe urée et d'un groupe uréthane.

2. Article enduit (100, 200, 300) selon la revendication 1, dans lequel le liant (110) est un polymère contenant du silicium qui comprend un ensemble de groupes époxy.

3. Article enduit (100, 200, 300) selon la revendication 2, dans lequel le polymère contenant du silicium comprend de 0,2 pour cent à 5 pour cent en poids de l'ensemble de groupes époxy.

4. Article enduit (100, 200, 300) selon la revendication 1, dans lequel le liant (110) est un polyol qui comprend un ensemble de groupes isocyanate.

5. Article enduit (100, 200, 300) selon la revendication 4, dans lequel le polyol comprend de 5 pour cent à 30 pour cent en poids de l'ensemble de groupes isocyanate.

6. Article enduit (100, 200, 300) selon la revendication 1, dans lequel au moins une de la pluralité de microcapsules (112) est chimiquement liée à la fois au substrat et au lient (110).

7. Article enduit (100, 200, 300) selon la revendication 1, dans lequel la pluralité de microcapsules (112) est mono dispersée par rapport à leurs tailles.

8. Article enduit (100, 200, 300) selon la revendication 1, dans lequel la pluralité de microcapsules (112) contient un matériau à changement de phase ayant une enthalpie de changement d'état d'au moins 40 J/g et une température de transition dans la plage de 0°C à 50°C.

9. Article enduit (100, 200, 300) selon l'une des revendications précédentes, dans lequel le revêtement comprend un catalyseur pour faciliter ladite liaison chimique.

10. Article enduit (100, 200, 300) selon la revendication 8 ou la revendication 9, si elle dépend de la revendication 8, dans lequel le revêtement est adjacent au substrat et la pluralité de microcapsules (112) est dispersée dans le liant (110), au moins une de la pluralité de microcapsules (112) comprenant une coquille définissant un compartiment interne et comprenant un ensemble de groupes fonctionnels pour lier chimiquement au moins l'un du substrat et du liant.

11. Article enduit (100, 200, 300) selon la revendication 10, dans lequel le liant (110) est réticulé par la coquille d'au moins une de la pluralité de microcapsules (112).

12. Article enduit (100, 200, 300) selon la revendication 10, dans lequel l'ensemble de groupes fonctionnels comprend au moins un d'un groupe anhydride d'acide, d'un groupe aldéhyde, d'un groupe amino, d'un groupe amino N-substitué, d'un groupe carbonyle, d'un groupe carboxy, d'un groupe époxy, d'un groupe ester, d'un groupe éther, d'un groupe glycidyle, d'un groupe hydroxy, d'un groupe isocyanate, d'un groupe thiol, d'un groupe disulfure, et d'un groupe silyle.

13. Article enduit (100, 200, 300) selon la revendication 10, dans lequel le matériau à changement de phase comprend un alcane linéaire ayant de 14 à 23 atomes de carbone.
